# EUROPEAN PATENT SPECIFICATION

(11) **EP 1 642 819 B1**
(45) Date of publication and mention of the grant of the patent: **24.01.2007**
(21) Application number: 05017975.3
(22) Date of filing: 18.08.2005
(51) Int. Cl.: B62M 17/00, B62K 25/28

(54) **Swing arm supporting structure for motorcycle**
Schwingarm-Tragkonstruktion für Motorräder
Structure de support de bras oscillant pour motocyclette

(30) Priority: 29.09.2004 JP 2004284383
(43) Date of publication of application: 05.04.2006
(73) Proprietor: Honda Motor Co., Ltd., Tokyo (JP)
(72) Inventor: Kofuji, Kenji K.K. Honda Gijutsu Kenkyusho, Wako-shi Saitama (JP)
(74) Representative: Rupp, Christian

(56) References cited:
- PATENT ABSTRACTS OF JAPAN vol. 2000, no. 17, 5 June 2001 (2001-06-05) & JP 01 085888 A (YAMAHA MOTOR CO LTD), 30 March 1989 (1989-03-30)
- PATENT ABSTRACTS OF JAPAN vol. 2002, no. 07, 3 July 2002 (2002-07-03) & JP 2002 087364 A (YAMAHA MOTOR CO LTD), 27 March 2002 (2002-03-27)

## Description

The present invention relates to a swing arm supporting structure for a motorcycle and, more specifically, to an improved swing arm supporting structure for a motorcycle in which a front portion of a swing arm which journals a rear wheel at a rear portion thereof is swingably supported by a vehicle body frame via first and second bearing means disposed at two positions on left and right sides aligned on one side of a drive shaft for transmitting a power to the rear wheel, and a cushion unit is provided between the vehicle body frame and the swing arm.

Such a swing arm supporting structure for a motorcycle is known for example in Patent Document 1, and in this structure, two left and right bearing means interposed between a pivot shaft provided on a vehicle body frame side and a swing arm are disposed at positions offset from a centerline of a vehicle body extending in the fore-and-aft direction.

### [Patent Document 1] JP-A-2002-87364

However, with the pair of left and right bearing means are disposed at the positions offset from the centerline of the vehicle body as the structure disclosed in Patent Document 1, a force in a twisting direction acts on the bearing means by an input force acting on the swing arm from a road surface via the rear wheel. In addition, when needle bearings are used as bearing means, a load tends to be applied unevenly to part of the needles and hence durability of the bearing means must be increased.

In view of such circumstances, it is an object of the present invention is to provide a swing arm supporting structure for a motorcycle, in which application of a force in the twisting direction to a pair of left and right bearing means is prevented and a load applied to at least one of the bearing means is reduced.

In order to achieve the above-described object, the invention according to Claim 1 is a swing arm supporting structure for a motorcycle in which a front portion of a swing arm which journals a rear wheel at a rear portion thereof is swingably supported by a vehicle body frame via first and second bearing means disposed at two positions on left and right sides aligned on one side of a drive shaft for transmitting a power to the rear wheel, and a cushion unit is provided between the vehicle body frame and the swing arm, characterized in that the first bearing means out of the first and second bearing means, which is disposed on the drive shaft side, is disposed so as to extend across a centerline of a vehicle body extending in the fore-and-aft direction.

In addition to the structure of the invention according to Claim 1, the invention according to Claim 2 is characterized in that a bracket provided on the swing arm in order to connect the cushion unit is disposed at a position where part of the bracket is overlapped with the centerline of the vehicle body.

In addition to the structure of the invention according to Claim 2, the invention according to Claim 3 is characterized in that the bracket is formed so as to extend from a connecting portion to the cushion unit toward the first bearing means side.

In addition to the structure of the invention according to Claim 1, the invention according to Claim 4 is characterized in that a single bolt is penetrated through a pair of left and right pivot plates provided on the vehicle body frame and a supporting cylinder provided at the front portion of the swing arm and provided between the both pivot plates, and the first and second bearing means are interposed between the supporting cylinder and the bolt.

In addition to the structure of the invention according to Claim 4, the invention according to Claim 5 is characterized in that a nut is screwed on a projecting portion of the bolt which is inserted from the pivot plate out of the both pivot plates which is on the opposite side from the drive shaft and is projected from the pivot plate on the drive shaft side toward the drive shaft side.

According to Claim 1 of the invention, since the first bearing means out of the first and second bearing means, which is disposed on the drive shaft side, is disposed so as to extend across the centerline of the vehicle body extending in the fore-and-aft direction, the input to the swing arm is supported on the centerline of the vehicle body, and hence major part of the input to the swing arm acts on the first bearing means, and a load applied to the second bearing means can be reduced.

According to Claim 2 of the invention, the load of the bearing means can further be reduced by preventing application of the force in the twisting direction from the cushion unit to the swing arm.

According to Claim 3 of the invention, rigidity of the swing arm against a force in the twisting direction is increased and a smooth swinging operation of the swinging arm with less rattling is achieved.

According to Claim 4 of the invention, since the swing arm is swingably supported by the single bolt provided between the both pivot plates of the vehicle body frame, not only supporting rigidity of the swing arm and the dimensional accuracy between the both bearing means, but also rigidity against the twisting direction can be increased, whereby a capacity of the second bearing means can relatively be decreased.

In addition, according to Claim 5 of the invention, since formation of thread on the swing arm or the vehicle body frame is not necessary, the swing arm or the vehicle body frame can be formed of light alloy such as aluminum alloy.
Fig. 1 is a side view of a rear portion of a motorcycle.
Fig. 2 is a cross-sectional view taken along a line 2-2 in Fig. 1.
Fig. 3 is a cross-sectional view taken along a line 3-3 in Fig. 1.
Fig. 4 is a plan view of a swing arm.
Fig. 5 is a cross-sectional view taken along a line 5-5 in Fig. 4.

Based on an embodiment of the present invention shown in accompanied drawings, an embodiment of the present invention will be described below.

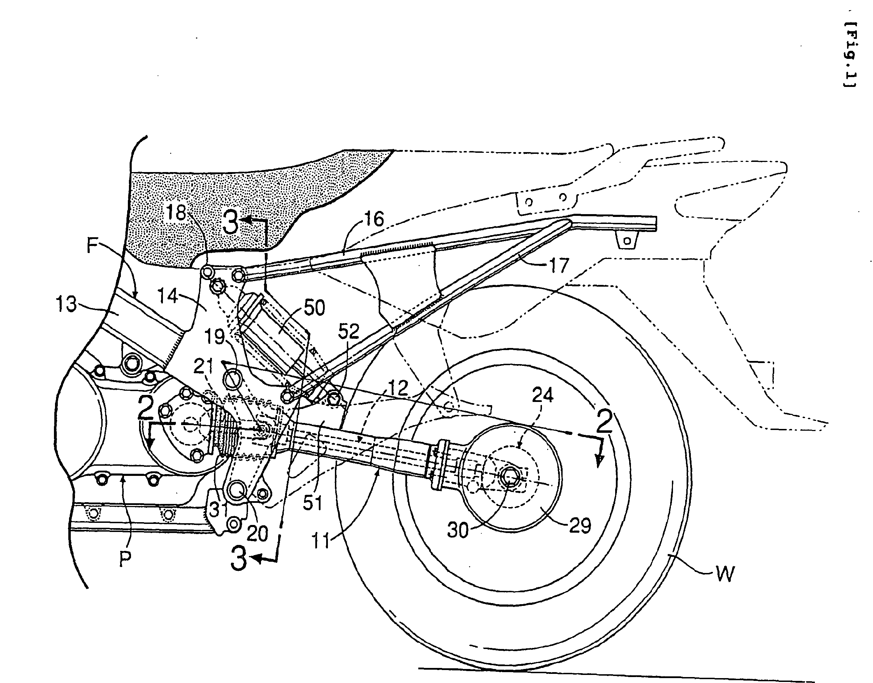

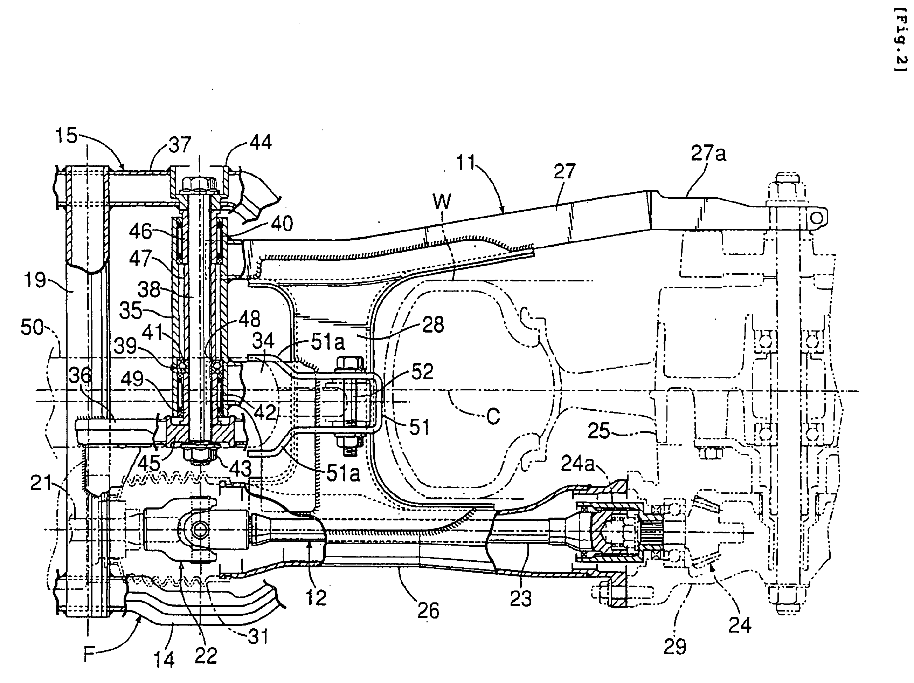

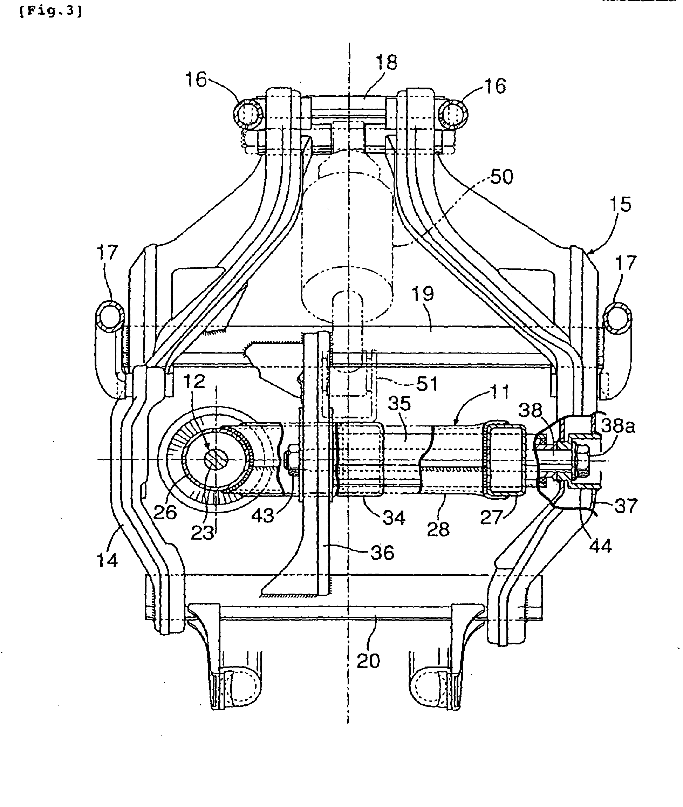

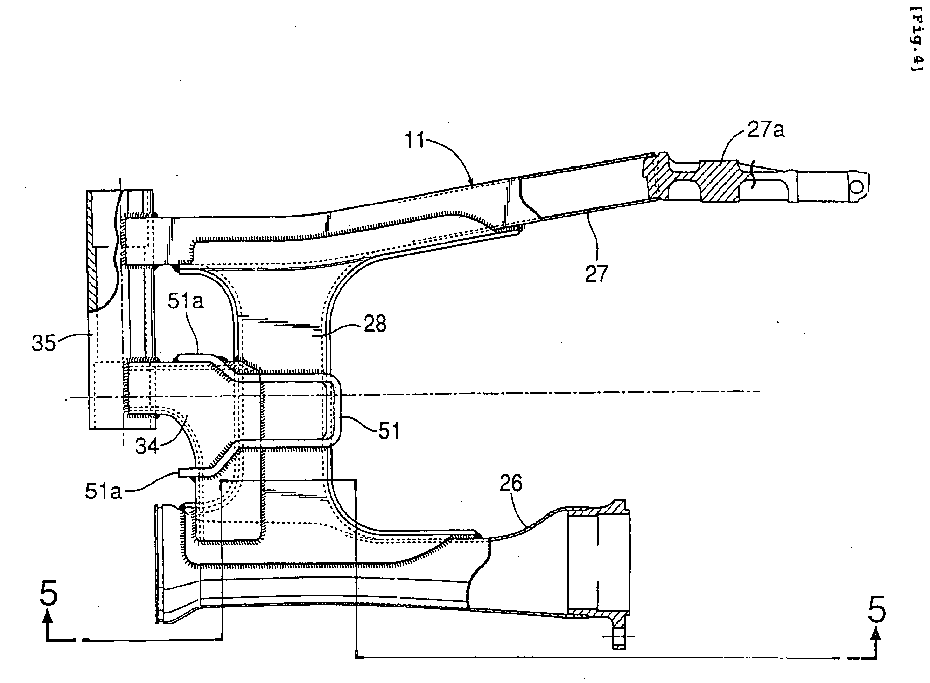

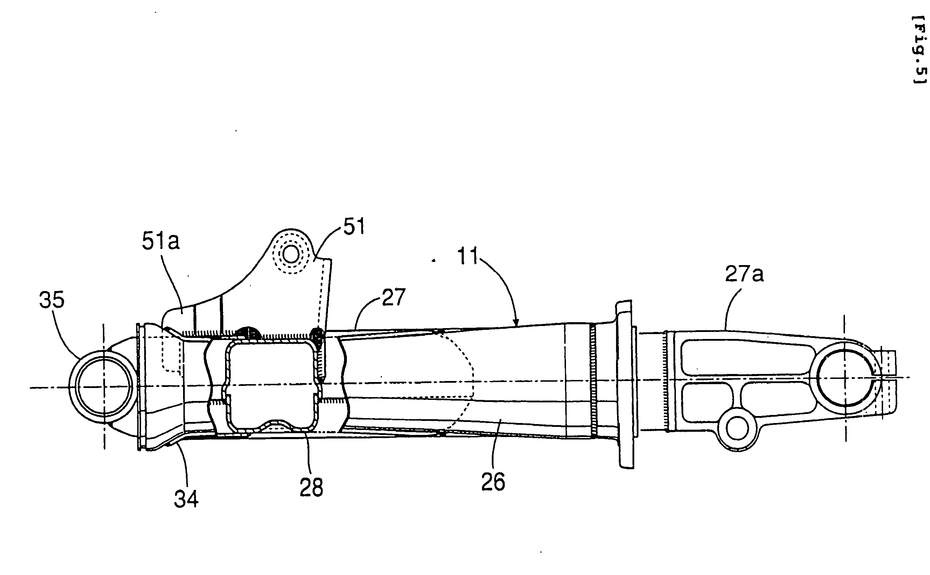

Fig. 1 to Fig. 5 show an embodiment of the present invention. Fig. 1 is a side view of a rear portion of a motorcycle; Fig. 2 is a cross-sectional view taken along a line 2-2 in Fig. 1; Fig. 3 is a cross-sectional view taken along a line 3-3 in Fig. 1; Fig. 4 is a plan view of a swing arm; and Fig. 5 is a cross-sectional view taken along a line 5-5 in Fig. 4.

In Fig. 1, a power unit P including an engine and a transmission is mounted at a center of a vehicle body frame F of the motorcycle, and a front portion of a swing arm 11 is supported so as to be capable of swinging motion in the vertical direction, and a power transmission mechanism 12 of shaft-drive type is provided between a rear wheel W journaled at a rear portion of the swing arm 11 and the power unit P.

Referring also to Fig. 2 and Fig. 3, the vehicle body frame F includes a pair of left and right main frames 13... extending downward toward the rear above the power unit P, a pair of left and right center frames 14, 15 connected to rear ends of the main frames 13... so as to extend in the vertical direction, a pair of seat rails 16... connected to upper ends of the both center frames 14, 15 and so as to extend upward toward the rear, and a pair of left and right rear frames 17... connected at front ends thereof to vertical midsections of the center frames 14, 15 so as to extend upward toward the rear and connected at rear ends to rear portions of the both seat rails 16....

A first cross pipe 18 is provided so as to extend between the upper portions of the both center frames 14, 15, a second cross pipe 19 is provided so as to extend between the vertical midsections of the both center frames 14, 15, and a third cross pipe 20 is provided so as to extend between lower portions of the both center frames 14, 15.

An output shaft 21 of the power unit P is arranged at a rear of the power unit P on the left side when viewed in the direction of travel of the motorcycle and has an axial line extending in the fore-and-aft direction. The power transmission mechanism 12 interposed between the output shaft 21 and the rear wheel W has an axial line extending in the fore-and-aft direction, and is provided with a drive shaft 23 interlocked and connected at a front end thereof with the output shaft 21 via a universal joint 22. A rear end of the drive shaft 23 is interlocked and connected with a wheel 25 of the rear wheel W via a bevel mechanism 24.

Referring also to Fig. 4 and Fig. 5, the swing arm 11 includes a pair of left and right rear fork pipes 26, 27 extending in the fore-and-aft direction while sandwiching the rear wheel W from both sides, and a. cross member 28 for connecting front portions of the rear fork pipes 26, 27 with respect to each other. A gear case 29 including the bevel mechanism 24 integrated therein is connected to a rear end of the left rear fork pipe 26, and an axle 30 for rotatably journaling the rear wheel W between the gear case 29 and a shaft supporting portion 27a connected to a rear end of the right rear fork pipe 27.

The drive shaft 23 is stored in the rear fork pipe 26 so as to extend longitudinally in the left rear fork pipe 26. In addition, the rear end portion of the drive shaft 23 is spline fitted to an input shaft 24a of the bevel mechanism 24 so as to disable relative rotation about an axial line and enable relative movement along the axial line. A boot 31 for covering the universal joint 22 is provided between a front end portion of the left rear fork pipe 26 and the power unit P.

A supporting cylinder 35 having an axial line parallel to the axle of the rear wheel W is secured to a front end portion of the right rear fork pipe 27 of the swing arm 11 and a front end portion of a supporting arm 34 fixed to a lateral center of the cross member 28 and extending toward the front.

The vehicle body frame F is provided with a pair of left and right pivot plates 36, 37 disposed on both sides of the supporting cylinder 35, and the left pivot plate 36 is secured to the second and third cross pipes 19, 20 provided so as to extend between the both center frames 14, 15, and disposed inwardly of the drive shaft 23, and a lower portion of the right center frame 15 is configured as the right pivot plate 37.

A single bolt 38 is provided so as to penetrate through the left and right pivot plates 36, 37 and the supporting cylinder 35 at the front portion of the swing arm 11, and first bearing means 39 and second bearing means 40 are interposed between the supporting cylinder 35 and the bolt 38 so as to be arranged between the supporting cylinder 35 and the bolt 38 at two positions on the left and right sides aligned on the right side, which is one side, of the drive shaft 23.

The first bearing means 39 is to be interposed between the bolt 38 and the supporting cylinder 35 at a position corresponding to the connecting portion of the supporting arm 34 with respect to the supporting cylinder 35, and includes a ball bearing 41 and a needle bearing 42 in a juxtaposed arrangement. In addition, as clearly shown in Fig. 2, the first bearing means 39 is disposed so as to extend across the centerline C of the vehicle body extending in the fore-and-aft direction. On the other hand, the second bearing means 40 is a needle bearing, and is interposed between the bolt 38 and the supporting cylinder 35 at a position corresponding to the connecting portion at the front end portion of the right rear fork pipe 27 with respect to the supporting cylinder 35.

The bolt 38 is to be inserted from the right pivot plate 37 out of the both pivot plates 36, 37, which is the opposite side from the drive shaft 23, and to be projected from the left pivot plate 36, which is the drive shaft 23 side, toward the drive shaft 23, and a nut 43 is screwed with a portion of the bolt 38 projected from the left pivot plate 36.

In order to insert the bolt 38, a first shaft supporting member 44 of a bottomed cylindrical shape for engaging with and storing an enlarged head 38a of the bolt 38 is fixed to the right pivot plate 37, and a second shaft supporting member 45 of a ring shape is fixed to the left pivot plate 36. Therefore, the bolt 38 which engages the enlarged head 38a with the first shaft supporting member 44 and penetrates the first shaft supporting member 44 penetrates the second shaft supporting member 45 via the supporting cylinder 35 toward the drive shaft 23 side, whereby an inner ring 46 of the second bearing means 40, which is the needle bearing, a cylindrical spacer 47 which surrounds the bolt 38, an inner ring 48 of the ball bearing 41 of the first bearing means 39, and an inner ring 49 of the needle bearing 42 are interposed between the first and second shaft supporting members 44, 45 so as to adjacently abut against each other in sequence from the side of the first shaft supporting member 44.

Provided between the vehicle body frame F and the swing arm 11 is a cushion unit 50, and an end of the cushion unit 50 is connected to the first cross pipe 18 provided so as to extend between the upper portions of the both center frames 14, 15. A bracket 51 for connecting the other end of the cushion unit 50 is provided on an upper surface of the cross member 28 in the swing arm 11, and the bracket 51 is disposed at a position where part of the bracket 51 is overlapped with the centerline C of the vehicle body.

Therefore, the other end of the cushion unit 50 is connected to the bracket 51 via a connecting bolt 52, and the bracket 51 is formed substantially into U-shape opening toward the front and having a pair of side plate portions 51a, 51a extending from the connecting portion to the cushion unit 50 toward the first bearing means 39.

Subsequently, the operation of this embodiment will be described. While the front portion of the swing arm 11 is swingably supported by the vehicle body frame F via the first and second bearing means 39, 40 disposed at two positions on the left and right sides aligned on the right side of the drive shaft 23, the first bearing means 39 disposed on the drive shaft 23 side out of the first and second bearing means is disposed so as to extend across the centerline C of the vehicle body extending in the fore-and-aft direction. Therefore, the input to the swing arm 11 is supported on the centerline C of the vehicle body, and hence a load applied to the second bearing means 40 can be reduced.

Also, since the bracket 51 provided on the swing arm 11 so as to connect the cushion unit 50 provided between the vehicle body frame F and the swing arm 11 is disposed at the position where part of the bracket 51 is overlapped with the centerline C of the vehicle body, the load applied to the both bearing means 39, 40 can further be reduced while preventing the force in the twisting direction from being applied from the cushion unit 50 to the swing arm 11.

In addition, since the bracket 51 is formed so as to extend from the connecting portion with respect to the cushion unit 50 toward the first bearing means 39, rigidity of the swing arm 11 against the force in the twisting direction can be increased, and a smooth swinging operation of the swing arm 11 with less rattling is achieved.

In addition, since the vehicle body frame F includes the pair of pivot plates 36, 37, and the single bolt 38 penetrates through the supporting cylinder 35 provided at the front portion of the swing arm 11 and disposed between the both pivot plates 36, 37 and the both pivot plates 36, 37, the first and second bearing means 39, 40 are interposed between the supporting cylinder 35 and the bolt 38, and the swing arm 11 is pivotably supported by the single bolt 38 provided between the both pivot plates 36, 37, not only supporting rigidity of the swing arm 11 and the dimensional accuracy between the both bearing means 39, 40, but also rigidity in the twisting direction can be increased, and the capacity of the second bearing means 40 can also be set to a relatively small value.

In addition, since the nut 43 is screwed on the projecting portion of the bolt 38 which is inserted from the pivot plate 37 out of the both pivot plates 36, 37 which is on the opposite side from the drive shaft 23 and is projected from the pivot plate 36 on the drive shaft 23 side toward the drive shaft 23 side, it is not necessary to form thread on the swing arm 11 or the vehicle body frame F, whereby the swing arm 11 or the vehicle body frame F can be formed of light alloy such as aluminum alloy.

While the embodiment of the present invention has been described, the present invention is not limited to the above-described embodiment, and various modifications in design may be made without departing the present invention stated in appended claims.

### [Description of the Reference Numerals and Signs]

11 ....swing arm
23 ... drive shaft
35 ... supporting cylinder
36, 37 ... pivot plate
38 ... bolt
39 ... first bearing means
40 ... second bearing means
43 ... nut
50 ... cushion unit
51 ... bracket
C ... centerline of vehicle body
F ... vehicle body frame
W ... rear wheel

## Claims

1. A swing arm supporting structure for a motorcycle in which a front portion of a swing arm (11) which journals a rear wheel (W) at a rear portion thereof is swingably supported by a vehicle body frame (F) via first and second bearing means (39, 40) disposed at two positions on left and right sides aligned on one side of a drive shaft (23) for transmitting a power to the rear wheel (W), and a cushion unit (50) is provided between the vehicle body frame (F) and the swing arm (11), **characterized in that** the first bearing means (39) out of the first and second bearing means (39, 40), which is disposed on the drive shaft (23) side, is disposed so as to extend across a centerline (C) of a vehicle body extending in the fore-and-aft direction.

2. A swing arm supporting structure for a motorcycle according to any of the preceding claims, **characterized in that** a bracket (51) provided on the swing arm (11) in order to connect the cushion unit (50) is disposed at a position where part of the bracket (51) is overlapped with the centerline (C) of the vehicle body.

3. A swing arm supporting structure for a motorcycle according to any of the preceding claims, **characterized in that** the bracket (51) is formed so as to extend from a connecting portion to the cushion unit (50) toward the first bearing means (39) side.

4. A swing arm supporting structure for a motorcycle according to any of the preceding claims, **characterized in that** a single bolt (38) is penetrated through a pair of left and right pivot plates (36, 37) provided on the vehicle body frame (F) and a supporting cylinder (35) provided at the front portion of the swing arm (11) and provided between the both pivot plates (36, 37), and the first and second bearing means (39, 40) are interposed between the supporting cylinder (35) and the bolt (38).

5. A swing arm supporting structure for a motorcycle according to any of the preceding claims, **characterized in that** a nut (43) is screwed on a projecting portion of the bolt (38) which is inserted from the pivot plate (37) out of the both pivot plates (36, 37) which is on the opposite side from the drive shaft (23) and is projected from the pivot plate (36) on the drive shaft (23) side toward the drive shaft (23) side.

## Patentansprüche

1. Schwingarm-Tragkonstruktion für ein Motorrad, bei der ein vorderer Bereich eines Schwingarms (11), an dem ein Hinterrad W an dessen rückwärtigem Bereich mit Drehzapfen gelagert ist, verschwenkbar an einem Fahrzeugkörperrahmen (F) mittels erster und zweiter Lager (39, 40) gelagert ist, die an zwei Stellen auf der linken und rechten Seite angeordnet sind und auf einer Seite einer Antriebswelle (23) für eine Kraftübertragung auf das Hinterrad (W) fluchtend angeordnet sind, und wobei eine Dämpfereinheit (50) zwischen dem Fahrzeugkörperrahmen (F) und dem Schwingarm (11) vorgesehen ist, **dadurch gekennzeichnet, dass** das erste Lager (39) von erstem und zweitem Lager (39, 40), welches auf der Antriebswellenseite (23) angeordnet ist, so angeordnet ist, dass es sich durch eine Mittellinie (C) eines Fahrzeugkörpers in der Längsrichtung erstreckt.

2. Schwingarm-Tragkonstruktion gemäß einem der vorhergehenden Ansprüche, **dadurch gekennzeichnet, dass** ein Bügel (51), der am Schwingarm (11) zur Verbindung mit der Dämpfereinheit (50) vorgesehen ist, an einer Stelle angeordnet ist, an der sich ein Teil des Bügels (51) mit der Mittellinie (C) des Fahrzeugkörpers überlappt.

3. Schwingarm-Tragkonstruktion gemäß einem der vorhergehenden Ansprüche, **dadurch gekennzeichnet, dass** der Bügel (51) so ausgebildet ist, dass er sich von einem Verbindungsbereich zur Dämpfereinheit (50) in Richtung der Seite des ersten Lagers (39) erstreckt.

4. Schwingarm-Tragkonstruktion gemäß einem der vorhergehenden Ansprüche, **dadurch gekennzeichnet, dass** ein einzelner Bolzen (38) ein Paar aus einer linken und rechten Schwenkplatte (36, 37), die am Fahrzeugkörperrahmen (F) vorgesehen sind, und einen Tragzylinder (35), der am vorderen Bereich des Schwingarms (11) vorgesehen ist und zwischen den beiden Schwenkplatten (36, 37) vorgesehen ist, durchdringt, und erstes und zweites Lager (39, 40) zwischen dem Tragzylinder (35) und dem Bolzen (38) angeordnet sind.

5. Schwingarm-Tragkonstruktion gemäß einem der vorhergehenden Ansprüche, **dadurch gekennzeichnet, dass** eine Mutter (43) auf einen vorstehenden Bereich des Bolzens (38) geschraubt ist, der von der Schwenkplatte (37) der beiden Schwenkplatten (36, 37) eingesetzt ist, die sich auf der von der Antriebswelle (23) abgewandten Seite befindet und der von der Schwenkplatte (36) auf der Antriebswellenseite (23) in Richtung der Antriebswellenseite (23) vorsteht.

## Revendications

1. Structure de support de bras oscillant pour motocyclette, dans laquelle une partie avant d'un bras oscillant (11), monté à sa partie arrière à rotation sur une roue arrière (W), est supportée de manière à pouvoir pivoter par un châssis de corps de véhicule (F) par l'intermédiaire de premiers et seconds roulements (39, 40) disposés à deux emplacements gauche et droit alignés d'un même côté d'un arbre de transmission (23), pour transmettre une force à la roue arrière (W), et un élément d'amortissement (50) est disposé entre le châssis de corps de véhicule (F) et le bras oscillant (11),
structure **caractérisée en ce que** les premiers des premiers et seconds roulements (39, 40), qui sont disposés du côté de l'arbre de transmission (23), sont disposés de manière à s'étendre en travers d'une ligne centrale (C) d'un corps de véhicule s'étendant dans la direction longitudinale.

2. Structure de support de bras oscillant pour motocyclette selon l'une des revendications précédentes, **caractérisée en ce qu'**un crochet (51), disposé sur le bras oscillant (11) pour connecter l'élément d'amortissement (50), est disposé dans une position dans laquelle une partie du crochet (51) est recouverte par la ligne centrale (C) du corps du véhicule.

3. Structure de support de bras oscillant pour motocyclette selon l'une des revendications précédentes, **caractérisée en ce que** le crochet (51) est formé de manière à s'étendre d'une partie de connexion à l'élément d'amortissement (50) en direction des premiers roulements (39).

4. Structure de support de bras oscillant pour motocyclette selon l'une des revendications précédentes, **caractérisée en ce qu'**un seul boulon (38) est inséré à travers une paire de plaques pivot gauche et droite (36, 37), disposées sur le châssis de corps de véhicule (F), et à travers un cylindre de support (35), disposé à la partie avant du bras oscillant (11) et disposé entre les deux plaques pivot (36, 37), et les premiers et seconds roulements (39, 40) sont interposés entre le cylindre de support (35) et le boulon (38).

5. Structure de support de bras oscillant pour motocyclette selon l'une des revendications précédentes, **caractérisée en ce qu'**un écrou (43) est vissé sur une partie en saillie du boulon (38), qui est inséré à partir de la plaque pivot (37), qui est du côté opposé à l'arbre de transmission (23), et fait saillie en direction de l'arbre de transmission (23) à partir de la plaque pivot (36) disposée du côté de l'arbre de transmission (23).
